# EUROPEAN PATENT APPLICATION

(11) **EP 4 123 789 A1**
(43) Date of publication of application: **25.01.2023**
(21) Application number: 21771489.8
(22) Date of filing: 11.03.2021
(51) Int. Cl.: H01M 10/6563, H01M 10/613, H01M 10/625, H01M 50/209

(54) **BATTERY DEVICE**

(30) Priority: 19.03.2020 JP 2020048717
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KANAYAMA, Yohsuke, Kawasaki-shi, Kanagawa 212-0013 (JP)
(74) Representative: AWA Sweden AB
(86) International application number: PCT/JP2021/009743
(87) International publication number: WO 2021/187300

(57) **Abstract**

In a battery device according to an embodiment, for example, a first housing includes: a pair of battery chambers each including a plurality of shelves and being sealed to the outside; a pair of partition walls configured to partition the battery chambers and an air passage, the partition walls including a plurality of vents for communicating each shelf and the air passage; an electric chamber arranged with the battery chambers and the air passage; and an isolation wall configured to isolate the electric chamber from the battery chambers and the air passage. A plurality of battery modules are housed in each shelf in the battery chambers. A heat sink cools the plurality of battery modules. A fan is provided at an end of the air passage and generates an air flow for cooling the battery modules housed in each shelf via the vents. A duct includes a storage chamber capable of storing a cable of the fan and isolates the storage chamber from the battery chambers.

## Description

### FIELD

An embodiment of the present invention relates to a battery device.

### BACKGROUND

A battery device including a plurality of battery modules and a fan that generates an air flow for cooling the plurality of battery modules has been conventionally known.

### CITATION LIST

### Patent Literature

Patent Literature 1: Japanese Patent Application Laid-open No. 2011-175896

### SUMMARY OF THE INVENTION

### Problem to be Solved by the Invention

In this type of battery device, for example, it is beneficial to obtain a novel configuration with less inconvenience such that both safety and cooling performance can be ensured.

### Means for Solving Problem

A battery device according to an embodiment includes a first housing, a plurality of battery modules, a heat sink, a fan, and a duct. The first housing includes: an air passage extending in an up-down direction; a pair of battery chambers provided on both left and right sides of the air passage, each of the battery chambers including a plurality of shelves arranged in the up-down direction and being sealed to an outside; a pair of partition walls configured to partition the battery chambers and the air passage, the partition walls including a plurality of vents for communicating each of the shelves and the air passage; an electric chamber arranged in a front-rear direction with the battery chambers and the air passage; and an isolation wall configured to isolate the electric chamber from the battery chambers and the air passage. The plurality of battery modules are housed in each of the shelves in the battery chambers. The heat sink is configured to cool the plurality of battery modules. The fan is provided at an end of the air passage, the fan generating an air flow for cooling the battery modules housed in each of the shelves via the vents. The duct includes a storage chamber capable of storing a cable of the fan, the duct isolating the storage chamber from the battery chambers.

### BRIEF DESCRIPTION OF DRAWINGS

FIG. 1 is an exemplary and schematic perspective view of a battery device according to an embodiment.
FIG. 2 is an exemplary and schematic perspective view of a battery module of the battery device according to the embodiment.
FIG. 3 is an exemplary and schematic side view of a part of the battery device according to the embodiment in a state where a side cover is removed.
FIG. 4 is an exemplary and schematic YZ sectional view of a part of a battery chamber of the battery device of the embodiment.
FIG. 5 is an exemplary and schematic XY sectional view of a part of a lower end part of the battery device of the embodiment.

### DETAILED DESCRIPTION

Hereinafter, exemplary embodiments of the present invention are disclosed. The configurations of the embodiments described below and the functions and effects brought about by the configurations are examples. The present invention may also be realized by configurations other than those disclosed in the following embodiments. According to the present invention, it is possible to obtain at least one of various effects (including derivative effects) obtained by the configurations.

In the present specification, ordinal numbers are used only to distinguish components, members, parts, positions, directions, and the like, and do not indicate order or priority.

### [Embodiment]

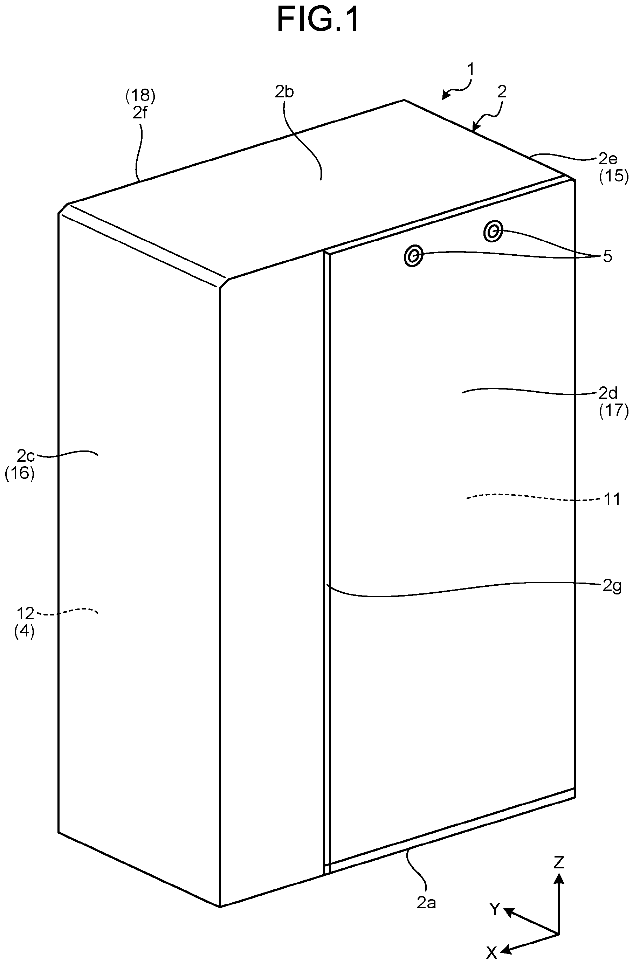

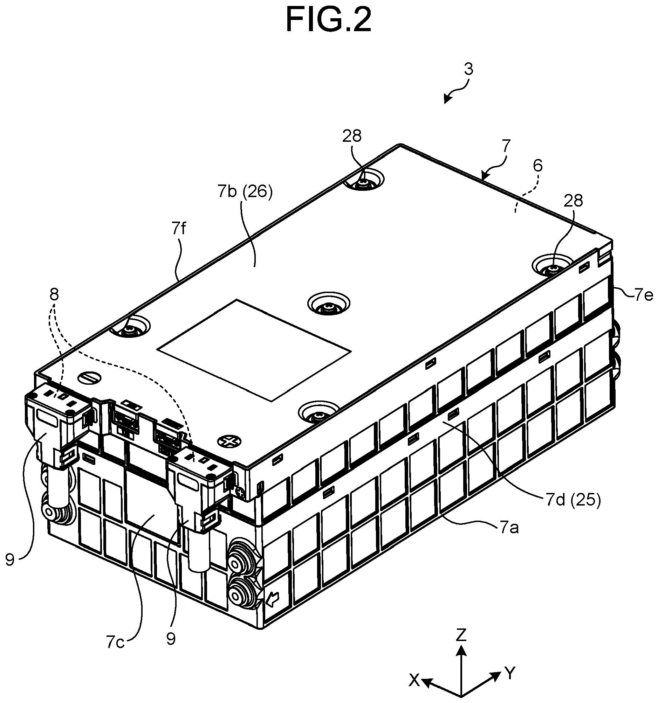

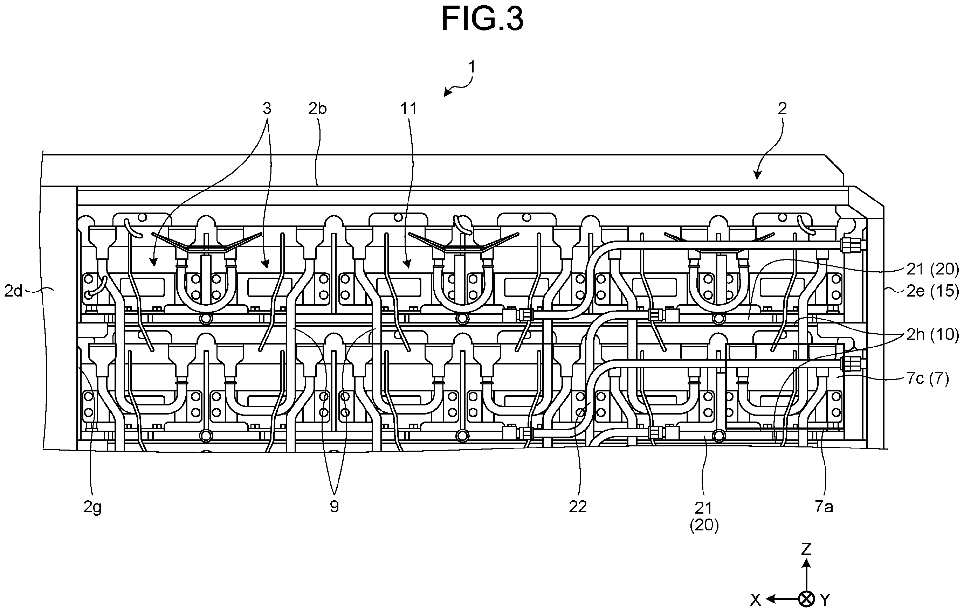

FIG. 1 is a perspective view of a battery device 1 according to an embodiment. As illustrated in FIG. 1, the battery device 1 includes, for example, a housing 2, a plurality of battery modules 3 (see FIG. 2) housed in a battery chamber 11 in the housing 2, and a plurality of electric devices 4 housed in an electric chamber 12 in the housing 2. In the present embodiment, for example, the plurality of battery modules 3 are installed on each shelf 10 (see FIG. 3) in the battery chamber 11, and the plurality of battery modules 3 are connected in series or in parallel to configure the battery device 1. The housing 2 is an example of a first housing.

The battery device 1 is installed in various devices, machines, facilities, and the like, and is used as a power source for the various devices, machines, facilities, and the like. For example, the battery device 1 may be mounted on a railway vehicle and may be used as a power source of the railway vehicle. A set in which a plurality of battery devices 1 shown in the present embodiment are connected in series or in parallel may be mounted on the railway vehicle. The battery device 1 is also referred to as a railway vehicle storage battery device or the like.

In the following description, three directions orthogonal to each other are defined for convenience. The X direction is along a depth direction (front-rear direction) of the housing 2 and along a width direction (transverse direction) of the battery module 3. The Y direction is along a width direction (left-right direction) of the housing 2 and along a longitudinal direction of the battery module 3. The Z direction is along a height direction (up-down direction) of the housing 2 and along a height direction of the battery module 3.

In the following description, for convenience, the X direction may be referred to as forward direction, the opposite direction of the X direction may be referred to as rearward direction, the Y direction may be referred to as rightward direction, the opposite direction of the Y direction may be referred to as leftward direction, the Z direction may be referred to as upward direction, and the opposite direction of the Z direction may be referred to as downward direction.

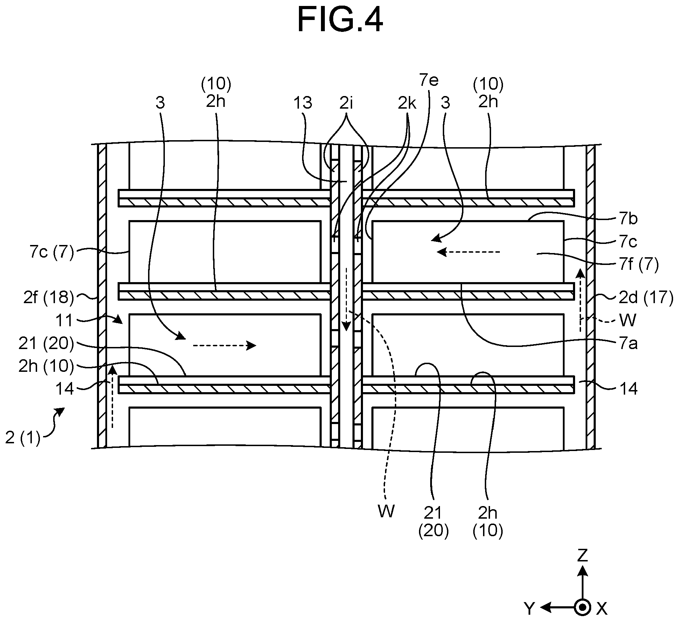

As illustrated in FIG. 1, the housing 2 is formed in a rectangular parallelepiped box shape that is short in the Y direction. The housing 2 has a plurality of walls such as a bottom wall 2a, a top wall 2b, a front wall 2c, a left wall 2d, a rear wall 2e, a right wall 2f, an isolation wall 2g, a shelf wall 2h (see FIG. 3), and a partition wall 2i (see FIG. 4). The front wall 2c, the left wall 2d, the rear wall 2e, and the right wall 2f are also referred to as side walls, peripheral walls, or the like.

The bottom wall 2a and the top wall 2b both extend along a direction (XY plane) orthogonal to the Z direction and are provided in parallel to each other at an interval in the Z direction. The bottom wall 2a constitutes the lower end of the housing 2, and the top wall 2b constitutes the upper end of the housing 2. The bottom wall 2a is also referred to as a lower wall or the like, and the top wall 2b is also referred to as an upper wall or the like.

Both the left wall 2d and the right wall 2f extend along a direction (XZ plane) orthogonal to the Y direction and are provided in parallel to each other at an interval in the Y direction. The right wall 2f extends between the ends of the bottom wall 2a and the top wall 2b in the Y direction, and the left wall 2d extends between the ends of the bottom wall 2a and the top wall 2b in the opposite direction of the Y direction. The left wall 2d constitutes the left end of the housing 2, and the right wall 2f constitutes the right end of the housing 2.

Each of the left wall 2d and the right wall 2f is provided with a pressure release valve 5. The pressure release valve 5 is disposed at the upper ends of the left wall 2d and the right wall 2f in the Z direction and faces the battery chamber 11 in the housing 2. The pressure release valve 5 opens when the pressure in the battery chamber 11 becomes higher than a threshold value to reduce the pressure in the battery chamber 11.

The front wall 2c and the rear wall 2e both extend along a direction (YZ plane) orthogonal to the X direction and are provided in parallel to each other at an interval in the X direction. The front wall 2c extends between the ends of the bottom wall 2a and the top wall 2b in the X direction, and the rear wall 2e extends between the ends of the bottom wall 2a and the top wall 2b in the opposite direction of the X direction. The front wall 2c constitutes the front end of the housing 2, and the rear wall 2e constitutes the rear end of the housing 2.

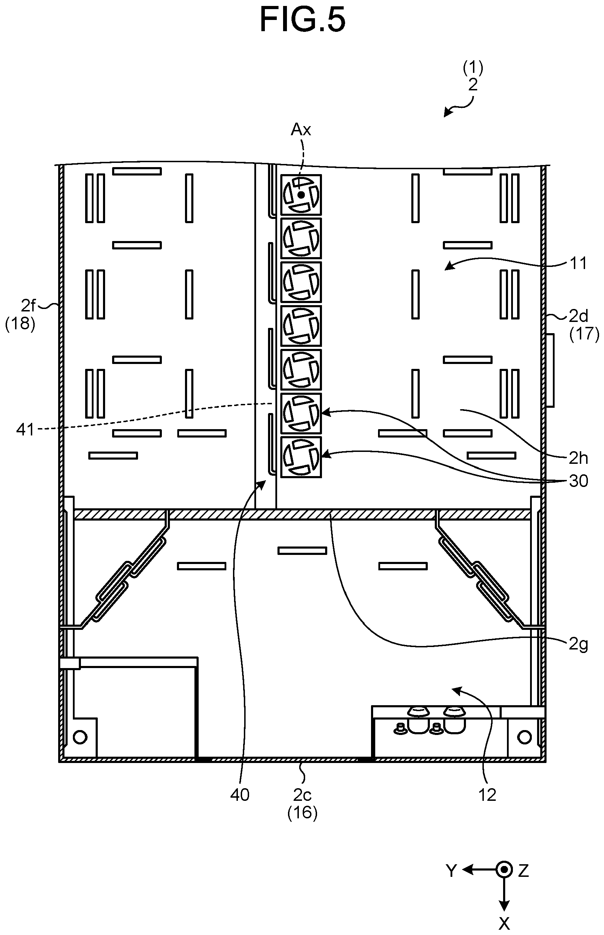

The isolation wall 2g (see FIG. 5) is positioned between the front wall 2c and the rear wall 2e and extends between the left wall 2d and the right wall 2f and between the bottom wall 2a and the top wall 2b. The isolation wall 2g is parallel to the front wall 2c and the rear wall 2e. The isolation wall 2g divides the inside of the housing 2 into the battery chamber 11 and the electric chamber 12 as a plurality of spaces in the X direction. The isolation wall 2g isolates the electric chamber 12 from the battery chamber 11 and an air passage 13 (see FIG. 4) to be described later.

The partition wall 2i is positioned between the left wall 2d and the right wall 2f and extends between the isolation wall 2g and the rear wall 2e and between the bottom wall 2a and the top wall 2b described above. In the housing 2, a pair of partition walls 2i are provided in parallel to each other at an interval in the Y direction. The air passage 13 to be described later is provided between the pair of partition walls 2i. The partition walls 2i partition the inside of the housing 2 into a pair of battery chambers 11 and the air passage 13 as a plurality of spaces in the Y direction.

The shelf wall 2h is positioned between the bottom wall 2a and the top wall 2b and extends between the partition wall 2i and the left wall 2d and between the partition wall 2i and the right wall 2f. In the housing 2, a plurality of shelf walls 2h are provided in parallel to each other at intervals in the Z direction. The shelf walls 2h partition the inside of the battery chamber 11 into shelves 10 as a plurality of spaces in the Z direction. The shelf walls 2h may be supported by the housing 2 to be slidable along the Y direction, that is, drawable, for example.

Each shelf 10 houses, for example, six battery modules 3 (see FIG. 3) in a state of being arranged in the X direction. In other words, each shelf wall 2h supports a module row including six battery modules 3 arranged in the X direction. The module row is also referred to as a module group or the like.

As illustrated in FIG. 1, the housing 2 is composed of, for example, a combination of a plurality of components (divided bodies) such as a base 15, a front cover 16, and side covers 17, 18. The base 15, the front cover 16, and the side covers 17, 18 are each formed of a synthetic resin material, a metal material, or the like.

The base 15 includes the bottom wall 2a, the top wall 2b, the rear wall 2e, the isolation wall 2g, the shelf wall 2h, and the partition wall 2i. The front cover 16 includes the front wall 2c. The side cover 17 includes the left wall 2d, and the side cover 18 includes the right wall 2f. The front cover 16 and the side covers 17, 18 are coupled to the base 15 by a coupling tool such as a screw, a clamp material, or the like in a state where the electric chamber 12 and the battery chamber 11 are covered from the outside, for example.

Sealing members (not illustrated) are provided between the base 15 and the side covers 17, 18, between the base 15 and the front cover 16, and the like. The sealing member is, for example, a frame-shaped packing (gasket) or the like formed along the edge of the battery chamber 11 or the electric chamber 12. The sealing member prevents gas, liquid, or the like from leaking from the periphery of the battery chamber 11 or the electric chamber 12. In other words, the battery chamber 11 and the electric chamber 12 are sealed to the outside of the housing 2.

FIG. 2 is a perspective view of the battery module 3 of the battery device 1. As illustrated in FIG. 2, the battery module 3 includes, for example, a housing 7, a plurality of battery cells 6 housed in the housing 7, and an output terminal 8 electrically connected to the plurality of battery cells 6 via a bus bar or the like. The power of the plurality of battery cells 6, that is, the power of the battery module 3 is taken out to the outside via a cable 9 electrically connected to the output terminal 8. The housing 7 is an example of a second housing.

The battery cell 6 may be composed of, for example, a lithium-ion secondary battery or the like. The battery cell 6 may be another secondary battery such as a nickel-metal hydride battery or a nickel-cadmium battery. The lithium-ion secondary battery is a type of non-aqueous electrolyte secondary battery, in which lithium ions in an electrolyte are responsible for electrical conduction. The battery cell 6 is a so-called prismatic can type cell and is also referred to as a can cell or the like.

The plurality of battery cells 6 are housed in the housing 7, for example, in a vertical orientation, in other words, an orientation in which each terminal surface faces the Z direction. The plurality of battery cells 6 are arranged in a plurality of rows in the X direction and the Y direction in the housing 7, for example.

The housing 7 is formed in, for example, a rectangular parallelepiped box shape that is short in the X direction. The housing 7 has a plurality of walls such as a bottom wall 7a, a top wall 7b, a pair of end walls 7c, 7e, and a pair of side walls 7d, 7f. The bottom wall 7a is also referred to as a lower wall or the like, and the top wall 7b is also referred to as an upper wall or the like. The end walls 7c, 7e and the side walls 7d, 7f are also referred to as peripheral walls or the like.

The bottom wall 7a and the top wall 7b both extend along a direction (XY plane) orthogonal to the Z direction and are provided in parallel to each other at an interval in the Z direction. The bottom wall 7a constitutes the lower end of the housing 7, and the top wall 7b constitutes the upper end of the housing 7. The bottom wall 7a supports the lower surface of each battery cell 6 and is thermally connected to the lower surface directly or indirectly via thermally conductive grease or the like.

Both the pair of end walls 7c, 7e extend along a direction (XZ plane) orthogonal to the Y direction and are provided in parallel to each other at an interval in the Y direction. The end wall 7e constitutes the end of the housing 7 in the Y direction, and the end wall 7c constitutes the end of the housing 7 in the opposite direction of the Y direction. The end walls 7c, 7e cover the short side surfaces or the long side surfaces of each battery cell 6.

Both the pair of side walls 7d, 7f extend along a direction (YZ plane) orthogonal to the X direction and are provided in parallel to each other at an interval in the X direction. The side wall 7f constitutes the end of the housing 7 in the X direction, and the side wall 7d constitutes the end of the housing 7 in the opposite direction of the X direction. The side walls 7d, 7f cover the long side surfaces or the short side surfaces of each battery cell 6.

The housing 7 is composed of, for example, a combination of a plurality of components (divided bodies) such as a case 25 and a top cover 26. The case 25 and the top cover 26 are each formed of a synthetic resin material, a metal material, or the like.

The case 25 includes, for example, the bottom wall 7a, the pair of end walls 7c, 7e, and the pair of side walls 7d, 7f. The top cover 26 includes, for example, the top wall 7b. The top cover 26 is coupled to the case 25 by a coupling tool 28 such as a screw, a snap fit, or the like in a state where the top cover 26 covers the storage chamber of the battery cell 6 from the Z direction.

FIG. 3 is a side view of a part of the battery device 1 in a state where the side cover 17 is removed. As illustrated in FIG. 3, each shelf 10 in the battery chamber 11 of the housing 2 is provided with a heat sink 20. The heat sink 20 includes, for example, a cooling plate 21 and a connection pipe 22.

The cooling plate 21 is formed in, for example, a quadrangular plate shape extending along the shelf wall 2h of the housing 2. In each shelf 10, the cooling plate 21 is interposed between the shelf wall 2h and the module row including six battery modules 3 arranged in the X direction. In other words, the cooling plate 21 is provided in a state of being thermally connected to the bottom wall 7a of each battery module 3.

A flow path through which a fluid such as cooling water for cooling the battery module 3 flows is provided inside the cooling plate 21. The flow path is connected to the connection pipe 22 and extends while meandering in the X direction and the Y direction inside the cooling plate 21 to exchange heat with the plurality of battery modules 3. In the present embodiment, for example, the flow paths of a plurality of cooling plates 21 arranged in the Z direction are connected in series, in parallel, or in a combination of series and parallel by a plurality of connection pipes 22.

In addition, a thermally conductive layer (not illustrated) is provided between the cooling plate 21 and the bottom wall 7a of the battery module 3. The thermally conductive layer is, for example, thermally conductive grease, a thermally conductive sheet, or the like. The thermally conductive layer improves thermal conductivity between the cooling plate 21 and the bottom wall 7a, and thus the cooling effect of the heat sink 20 on the bottom wall 7a, that is, the plurality of battery cells 6 can further improve.

FIG. 4 is a YZ sectional view of a part of the battery chamber 11 of the battery device 1. As illustrated in FIG. 4, the air passage 13 extending along the Z direction is provided in a substantially central part of the battery chamber 11 in the Y direction. The air passage 13 is provided between the pair of partition walls 2i described above and is arranged with each shelf 10 in the Y direction.

The upper end of the air passage 13 in the Z direction faces the top wall 2b of the housing 2. The lower end of the air passage 13 faces a fan 30 (see FIG. 5) to be described later. In the present embodiment, for example, the upper end of the partition wall 2i is joined to the top wall 2b by welding or the like, and the lower end of the partition wall 2i is joined to the bottom wall 2a or the lowermost shelf wall 2h. The lower end is an example of an end, and the top wall 2b is an example of an outer wall.

Each partition wall 2i is provided with a plurality of vents 2k. Each vent 2k is a through hole penetrating the partition wall 2i in the Y direction and communicates the air passage 13 with each shelf 10 of the battery chamber 11. For example, the vent 2k is elongated in the X direction to overlap with the module row including six battery modules 3 arranged in the X direction.

In the present embodiment, for example, an air flow W discharged from the fan 30 is supplied to each shelf 10 of the battery chamber 11 via a gap 14 between the left wall 2d and the shelf wall 2h and between the right wall 2f and the shelf wall 2h. Then, the air flow W passes through each shelf 10 in such a manner as to cross each shelf 10 in the Y direction and returns from the vent 2k to the fan 30 via the air passage 13.

Here, the top wall 7b, the end walls 7c, 7e, the side walls 7d, 7f, and the like of the housing 7 of the battery module 3 other than the bottom wall 7a facing the heat sink 20 face the space of each shelf 10. The air flow W can thus further improve the cooling effect on the battery module 3 by exchanging heat with the top wall 7b, the end walls 7c, 7e, the side walls 7d, 7f, and the like other than the bottom wall 7a in the process of passing through each shelf 10.

In this manner, in the present embodiment, the temperature rise of the plurality of battery modules 3 housed in each of the pair of battery chambers 11 can be more effectively inhibited by the cooling by the air flow W circulating (swirling) in the battery chamber 11 and the cooling by the heat sink 20.

FIG. 5 is an XY sectional view of a part of the lower end of the battery device 1. As illustrated in FIG. 5, the fan 30 is connected to the lower end of the air passage 13 described above. In the present embodiment, for example, the housing 2 is provided with a plurality of fans 30 arranged in the X direction. Each of the plurality of fans 30 faces the air passage 13.

The fan 30 is, for example, a centrifugal fan or an axial fan rotatable about a rotation center Ax extending along the Z direction. The fan 30 generates the air flow W flowing to circulate (swirl) in the above-described battery chamber 11 with the rotation of a blade around the rotation center Ax in an annular opening. The width of the fan 30 along the Y direction is substantially the same as or slightly smaller than the width of the air passage 13, that is, the distance between the pair of partition walls 2i. In other words, the fan 30 may be housed between the pair of partition walls 2i.

The fan 30 is adjacently provided with a duct 40 in the Y direction. The duct 40 extends along the X direction and is joined to the isolation wall 2g of the housing 2. A storage chamber 41 capable of storing a cable or the like of the fan 30 is provided inside the duct 40. The cable of the fan 30 is connected to the electric devices 4 and the like in the electric chamber 12 from the storage chamber 41 via a through hole (not illustrated) provided in the isolation wall 2g.

The fan 30, the duct 40, and the like may be housed, for example, in a space between the bottom wall 2a of the housing 2 and the lowermost shelf wall 2h. The fan 30 may be provided in a state of being exposed in the Z direction from the shelf wall 2h and covered from both sides in the Y direction by the pair of partition walls 2i. The duct 40 includes a top wall exposed in the Z direction from the shelf wall 2h, and the top wall isolates the battery chamber 11 from the storage chamber 41.

As described above, in the present embodiment, the battery device 1 includes a housing 2 (first housing), a plurality of battery modules 3, a heat sink 20, a fan 30, and a duct 40. The housing 2 (first housing) includes: a pair of battery chambers 11 each including a plurality of shelves 10 arranged in the Z direction and being sealed to an outside; a pair of partition walls 2i configured to partition the battery chambers 11 and an air passage 13, the pair of partition walls 2i including a plurality of vents 2k for communicating each shelf 10 and the air passage 13; an electric chamber 12 arranged in the X direction with the battery chambers 11 and the air passage 13; and an isolation wall 2g configured to isolate the electric chamber 12 from the battery chambers 11 and the air passage 13. The plurality of battery modules 3 are housed in each shelf 10 in the battery chambers 11. The heat sink 20 cools the plurality of battery modules 3. The fan 30 is provided at the lower end (an end) of the air passage 13, and generates an air flow W for cooling the battery modules 3 housed in each shelf 10 via the vents 2k. The duct 40 includes a storage chamber 41 capable of storing a cable of the fan 30, and isolates the storage chamber 41 from the battery chambers 11.

Such a configuration enables, for example, the plurality of battery modules 3 to be isolated from the electric devices 4 housed in the electric chamber 12, the cable of the fan 30 housed in the duct 40, and the like in the housing 2, which is likely to further increase the safety of the battery device 1. In addition, the temperature rise of the plurality of battery modules 3 arranged in the pair of battery chambers 11 can be more effectively inhibited, for example by the cooling by the heat sink 20 and the cooling by the air flow W of the fan 30. It is therefore possible to obtain the battery device 1 capable of securing, for example, both safety and cooling performance, which have conventionally contradicted each other.

In the present exemplary embodiment, each battery module 3 includes a plurality of battery cells 6 and the housing 7 (second housing) including the bottom wall 7a thermally connected to the plurality of battery cells 6, and the heat sink 20 is provided in a state of being thermally connected to the bottom wall 7a of each battery module 3.

Such a configuration enables the plurality of battery cells 6 to be more efficiently cooled for example by exchanging heat between the heat sink 20 and the bottom wall 7a of each battery module 3. Further, for example, the air flow W from the fan 30 cools the top wall 7b other than the bottom wall 7a of the battery module 3, the end walls 7c, 7e, the side walls 7d, 7f, and the like, which can inhibit the temperature rise of the plurality of battery cells 6 more effectively.

In the present embodiment, the heat sink 20 includes the cooling plate 21 provided with a flow path through which a fluid for cooling the plurality of battery cells 6 by exchanging heat with the bottom wall 7a flows.

Such a configuration enables, for example, the water-cooling or liquid-cooling type heat sink 20 with the cooling plate 21 to inhibit temperature rise of the plurality of battery modules 3 more effectively.

In the present embodiment, the partition wall 2i is joined to the top wall 2b (outer wall) of the housing 2, and the duct 40 is joined to the isolation wall 2g.

Such a configuration enables, for example, the partition wall 2i and the isolation wall 2g to improve rigidity and strength of the housing 2, which can secure durability and safety even when a plurality of battery modules 3 are arranged in the housing 2 at high density.

Although several embodiments of the present invention have been described, these embodiments are presented for illustrative purposes only, and are not intended to limit the scope of the invention. These novel embodiments can be implemented in various other forms, and various omissions, substitutions, combinations, and modifications can be made without departing from the scope of sprit of the invention. In addition, specifications (structure, type, direction, form, size, length, width, thickness, height, number, arrangement, position, material, and the like) of each configuration and shape can be appropriately changed and implemented.

## Claims

1. A battery device comprising:
a first housing including:
an air passage extending in an up-down direction;
a pair of battery chambers provided on both left and right sides of the air passage, each of the battery chambers including a plurality of shelves arranged in the up-down direction and being sealed to an outside;
a pair of partition walls configured to partition the battery chambers and the air passage, the partition walls including a plurality of vents for communicating each of the shelves and the air passage;
an electric chamber arranged in a front-rear direction with the battery chambers and the air passage; and
an isolation wall configured to isolate the electric chamber from the battery chambers and the air passage;
a plurality of battery modules housed in each of the shelves in the battery chambers;
a heat sink configured to cool the plurality of battery modules;
a fan provided at an end of the air passage, the fan generating an air flow for cooling the battery modules housed in each of the shelves via the vents; and
a duct including a storage chamber capable of storing a cable of the fan, the duct isolating the storage chamber from the battery chambers.

2. The battery device according to claim 1, wherein
each of the battery modules includes a plurality of battery cells and a second housing including a bottom wall thermally connected to the plurality of battery cells, and
the heat sink is provided in a state of being thermally connected to the bottom walls of the battery modules.

3. The battery device according to claim 2, wherein the heat sink includes a cooling plate provided with a flow path through which a fluid for cooling the plurality of battery cells by exchanging heat with the bottom walls flows.

4. The battery device according to any one of claims 1 to 3, wherein
the partition walls are joined to an outer wall of the first housing, and
the duct is joined to the isolation wall.
